# EUROPÄISCHE PATENTANMELDUNG

(11) **EP 3 680 097 A1**
(43) Veröffentlichungstag der Anmeldung: **15.07.2020**
(21) Anmeldenummer: 19151243.3
(22) Anmeldetag: 10.01.2019
(51) Int. Cl.: B32B 5/26, B32B 5/28, B29C 70/08, B29C 70/40

(54) **VERFAHREN ZUR HERSTELLUNG EINES THERMOPLASTISCH VERFORMBAREN FASERVERSTÄRKTEN FLÄCHIGEN HALBZEUGS**

(71) Anmelder: Quadrant Plastic Composites AG, 5600 Lenzburg 1 (CH)
(72) Erfinder: Die Erfindernennung liegt noch nicht vor
(74) Vertreter: Schmauder & Partner AG Patent- & Markenanwälte VSP

(57) **Zusammenfassung**

Die Erfindung betrifft ein Verfahren zur Herstellung eines thermoplastisch verformbaren faserverstärkten flächigen Halbzeugs mit Verbundstruktur (A-B-A') oder (A-B), umfassend:
- eine Kernlage (B) aus einem porösen Verstärkungsfaser-Thermoplastmaterial, mit einem Flächengewicht von 300 bis 3'000 g/m², einem Faseranteil von 20 bis 60 Gew.- % und einem Gehalt an Luftporen von 5 bis 80 Vol.%, sowie
- eine oder zwei stoffschlüssig mit der Kernlage (B) verbundene Decklagen (A, A') aus einem mit Thermoplast imprägnierten Verstärkungsfaser-Gewebe oder -Gelege, wobei jede Decklage eine Dicke von 0.2 bis 2.5 mm, ein Flächengewicht von 200 bis 4'000 g/m² und einen Luftporengehalt von weniger als 3 Vol.-% aufweist.

Dabei werden folgende Verfahrensschritte durchgeführt:
- auf einen Kernlagenvorgänger in Form eines flächigen porösen Verstärkungsfaser-Thermoplastmaterials mit einem Flächengewicht von 500 bis 3'000 g/m², einem Faseranteil von 20 bis 60 Gew.-% und einem Gehalt an Luftporen von 20 bis 80 Vol.% werden ein- oder beidseitig jeweils mindestens ein Verstärkungsfaser-Gewebe bzw. - Gelege mit einem Flächengewicht von 100 bis 1'000 g/m² sowie eine niedrigviskose Thermoplastschicht mit einem Flächengewicht von 50 bis 1'000 g/m² aufgebracht,
- die derart gebildete Lagenstruktur (A-B) bzw. (A-B-A') wird aufgeheizt und verpresst derart, dass der Thermoplast aufgeschmolzen und die Verstärkungsfasern in die aufgebrachten Verstärkungsfaser-Gewebe bzw. -Gelege sowie in die Kernlage eindringen und nach Abkühlen eine stoffschlüssige Verbindung von Kernlage und Decklage bilden.

## Beschreibung

### Technisches Gebiet

Die vorliegende Erfindung betrifft ein Verfahren zur Herstellung eines thermoplastisch verformbaren faserverstärkten flächigen Halbzeugs. Zudem betrifft die Erfindung ein Verfahren zur anschliessenden Herstellung eines flächiges Verbundbauteils.

### Stand der Technik

Verbundbauteile aus faserverstärkten Thermoplasten werden in zunehmendem Mass als Formteile in verschiedenen Bereichen der Technik eingesetzt.

Beispielsweise beschreibt die WO 2015/117799A1 ein Verbundbauteil mit einem Schaumkern, auf dessen Oberfläche beidseitig eine stoffschlüssig mit dem Schaumkern verbundene Deckschicht angeordnet ist. Zur Herstellung des Verbundbauteils werden die Deckschichten und der Schaumkern erwärmt, danach werden die Deckschichten auf den Oberflächen des Schaumkerns positioniert und das Ganze in eine Presse oder Form gebracht, die das fertige Verbundbauteil abbildet. Das Erwärmen kann auch erst in der Form erfolgen. Anschliessend werden Schaumkern und Deckschichten umgeformt und nach einer bestimmten Umformzeit wieder abgekühlt, wobei eine stoffschlüssige Verbindung zwischen Schaumkern und Deckschichten gebildet wird. Als Deckschichten werden einerseits metallische Deckschichten, insbesondere aus Aluminium beschrieben. Alternativ werden auch Deckschichten aus faserverstärktem Kunststoff beschrieben. Dadurch, dass während des Umformschrittes die Deckschichten auf den Oberflächen des Schaumkerns verschoben werden können, erweist sich das beschriebene Verfahren insbesondere für die Herstellung nicht-planarer Verbundbauteile mit komplexer Form als vorteilhaft.

Ein gattungsgemässes Verbundbauteil und ein Verfahren zu dessen Herstellung sind in der WO 2006/133586 A1 beschrieben. Diese betrifft eine biegesteife Verbundplatte, umfassend:
A. eine oder zwei Deckschichten mit einer Dicke von 0,5 bis 5 mm aus glasfaserverstärktem Polypropylen mit einem Glasgehalt von 20 bis 60 Gew.% und einem Gehalt an Luftporen von weniger als 5 Vol.%, und
B. eine Kernschicht mit einer Dicke von 2 bis 40 mm aus glasfaserverstärktem Polypropylen mit einem Glasgehalt von 35 bis 80 Gew.% und einem Gehalt an Luftporen von 20 bis 80 Vol.%.

Im beschriebenen Herstellungsverfahren wird die verwendete Kernschicht als poröse Platte bereitgestellt, wobei diese, wie beispielsweise in der WO 2006/105682 A1 beschrieben, durch trockenes Vermischen von Polypropylenfasern und Glasfasern, Vernadeln des Mischvlieses und Heissverpressen hergestellt werden kann. Als Deckschichten werden herkömmliche Glasfasermatten-Thermoplast-Platten (üblicherweise als "GMT-Platten" bezeichnet) bereitgestellt. Die Verstärkungsfasern der Deckschichten wie auch der Kernschichten werden bereits vor der Herstellung der biegesteifen Verbundplatte durch einen vorgelagerten Aufheiz- und Pressprozess mit Thermoplasten imprägniert und in der Folge als biegesteife Plattenelemente zwischengelagert. Zur Herstellung der eigentlichen Verbundplatte werden dann die zu verpressenden Schichten in Form von Platten vorgelegt, in einer Presse aufeinander gestapelt und bei Temperaturen zwischen 180 und 220°C während 5 bis 50 min verpresst. Die beschriebenen Verbundplatten werden insbesondere als Trennwände und Schalungselemente im Bauwesen, aber auch im Möbelbau als Ersatz für Spanplatten eingesetzt.

Zur Herstellung eines biegesteifen Verbundbauteils mit dem oben beschriebenen Verfahren, bei welchem die Deck- und Kernschichten als bereits konsolidierte und steife Platten bereitgestellt werden, sind insgesamt neun Prozessschritte erforderlich, nämlich:
- Bereitstellung der Kernschicht(en): 1) Vliesstoffherstellung, 2) Imprägnation der Verstärkungsfasern in einer Heizpresse (unter Druck & Temperatur), 3) Konsolidierung in einer Kühlpresse;
- Bereitstellung der Deckschichten: 1) Mattenherstellung, 2) Extrusion, 3) Imprägnation in einer Heizpresse, 4) Konsolidierung in einer Kühlpresse;
- Herstellung der Verbundplatte: 1) Aufheizen der Decklagen und Kernlagen in einer Heizpresse, 2) Abkühlen der Deck- & Kernlagen.

Die DE 195 20 477 A1 beschreibt faserverstärkte GMT-Platten, die aufgrund der Rückstellkräfte der Glasmatten beim Erhitzen expandieren und in ungleichmässiger Verteilung Luftblasen enthalten. Zur Herstellung dieser GMT-Platten werden vorerst entsprechende Glasmatten produziert werden. Anschliessend werden die Glasmatten mit schichtweise extrudierter Polypropylenschmelze bzw. mit Polypropylenfolien in einer Heizpresse imprägniert und anschliessend in einer Kühlpresse konsolidiert Die so hergestellten GMT Platten werden nach dem Konsolidieren bei Bedarf erneut erwärmt, um die gewünschte Expansion zu bewirken. Die expandierten GMT-Platten können als Stützkern zusammen mit Deckschichten zu einem Sandwich-Formteil verpresst werden. Das in der DE 195 20 477 A1 beschriebene Herstellungsverfahren beruht auf dem thermischen Verpressen eines auf Raumtemperatur abgekühlten und demzufolge erstarrten Stützkerns zusammen mit äusseren Schichten in Form von nicht expandierten GMT-Folien.

Zur Herstellung eines biegesteifen Verbundbauteils mit dem Verfahren der DE 195 20 477 A1 sind sogar zwölf Prozessschritte erforderlich, nämlich:
- Bereitstellung der Kernschicht(en): 1) Mattenherstellung, 2) Extrusion der Schmelzeschicht auf Matten, 3) Imprägnation der Verstärkungsfasern in einer Heizpresse (unter Druck & Temperatur), 4) Konsolidierung in einer Kühlpresse, 5) Aufheizung der konsolidierten Kernschichten, sodass sie expandieren, 6) Abkühlung der Kernschichten;
- Bereitstellung der Deckschicht(en): 1) Mattenherstellung, 2) Extrusion, 3) Imprägnation in einer Heizpresse, 4) Konsolidierung in einer Kühlpresse;
- Herstellung der Verbundplatte: 1) Aufheizen der Deckschichten, 2) Verpressen der Deckschichten mit kalter Kernschicht; deshalb ist die Herstellung auf flache Platten beschränkt, für 3D Teile müssten die Kerne vorgängig in einem weiteren Schritt entsprechend umgeformt und anschliessend mit Decklagen verpresst werden.

Nach wie vor besteht somit ein erheblicher Bedarf für weitere, insbesondere auch biegesteife, flächige und nach Bedarf dreidimensional geformte Verbundbauteile bzw. für entsprechende, einfache und wirtschaftliche Herstellungsverfahren. Insbesondere sind Verfahren zur Herstellung von Verbundbauteilen erwünscht, deren Eigenschaften für bestimmte Anwendungen deutlich verbessert sind.

### Darstellung der Erfindung

Eine Aufgabe der Erfindung ist es demnach, ein Verfahren zur Herstellung eines thermoplastisch verformbaren faserverstärkten flächigen Halbzeugs mit Verbundstruktur (A-B-A') oder (A-B) anzugeben.

Gelöst werden diese Aufgaben durch die in den Ansprüchen 11 definierten Herstellungsverfahren.

Vorteilhafte Ausgestaltungen der Erfindung sind nachfolgend beschrieben und in den abhängigen Ansprüchen definiert.

Gemäss einem ersten Aspekt der Erfindung wird ein Verfahren zur Herstellung eines thermoplastisch verformbaren faserverstärkten flächigen Halbzeugs mit einer Verbundstruktur (A-B-A') oder (A-B) angegeben. Das besagte Halbzeug umfasst:
- eine Kernlage (B) aus einem porösen Verstärkungsfaser-Thermoplastmaterial, mit einem Flächengewicht von 300 bis 3'000 g/m², einem Faseranteil von 20 bis 60 Gew.-% und einem Gehalt an Luftporen von 5 bis 80 Vol.%, insbesondere 10 bis 50 Vol.-%, sowie
- eine oder zwei stoffschlüssig mit der Kernlage (B) verbundene Decklagen (A, A') aus einem mit Thermoplast imprägnierten Verstärkungsfaser-Gewebe oder -Gelege, wobei jede Decklage eine Dicke von 0.2 bis 2.5 mm, ein Flächengewicht von 200 bis 4'000 g/m² und einen Luftporengehalt von weniger als 3 Vol.-% aufweist.

Das erfindungsgemässe Verfahren umfasst die folgenden Verfahrensschritte:
- auf einen Kernlagenvorgänger in Form eines flächigen porösen Verstärkungsfaser-Thermoplastmaterials mit einem Flächengewicht von 500 bis 3'000 g/m², einem Faseranteil von 20 bis 60 Gew.-% und einem Gehalt an Luftporen von 20 bis 80 Vol.% werden ein- oder beidseitig jeweils mindestens ein Verstärkungsfaser-Gewebe bzw. - Gelege mit einem Flächengewicht von 100 bis 1'000 g/m² sowie eine niedrigviskose Thermoplastschicht mit einem Flächengewicht von 50 bis 1'000 g/m² aufgebracht,
- die derart gebildete Lagenstruktur (A-B) bzw. (A-B-A') wird aufgeheizt und verpresst derart, dass der Thermoplast aufgeschmolzen und die Verstärkungsfasern in die aufgebrachten Verstärkungsfaser-Gewebe bzw. -Gelege sowie in die Kernlage eindringen und nach Abkühlen eine stoffschlüssige Verbindung von Kernlage und Decklage bilden;
wobei optional ein weiterer Aufheiz- und Verpressungsvorgang erfolgt.

Gemäss einem weiteren Aspekt der Erfindung wird ein Verfahren zur Herstellung eines flächigen Verbundbauteils angegeben. Dabei wird ein Zuschnitt eines nach einem der vorgenannten Ansprüche hergestellten Halbzeugs über den Schmelzpunkt des Thermoplasten erwärmt und in einem Formwerkzeug in das flächige Verbundbauteil umgeformt.

Der hier in der Einzahl verwendete Begriff "Thermoplast" setzt nicht zwangsläufig voraus, dass das in Form von Fasern, Folien oder letztlich als Matrix vorliegende Thermoplastmaterial in sämtlichen Lagen nur aus einem Thermoplastmaterial gebildet ist. Insbesondere können auch Mischfasern aus unterschiedlichen, aber kompatiblen Thermoplasten zum Einsatz kommen. Als "kompatibel" werden Thermoplasten verstanden, die eine stoffschlüssige Verbindung erlauben.

Der Begriff "niedrigviskose Thermoplastschicht" bezieht sich auf eine Schicht eines Thermoplastmaterials mit einem Schmelzflussindex MFI (230°C, 2.16 kg) nach DIN 53735, der im Fall von Polypropylen im Bereich von 50 bis 1'200 g/10 min, vorzugsweise 100 bis 400 g/10 min liegt.

Es versteht sich, dass im Hinblick auf das vorgesehene Verpressen der Begriff "aufgeheizt" dahingehend zu verstehen ist, dass eine zur thermoplastischen Umformung geeignete Temperatur vorliegt. Demnach sollen also alle zur Umformung vorgesehenen Thermoplastbereiche auf eine Temperatur aufgeheizt werden, die etwas oberhalb der jeweiligen Thermoplast-Schmelztemperatur liegt.

Je nach verwendetem Thermoplastmaterial erfolgt das Verpressen zu einem Verbundbauteil bei entsprechenden Temperaturen, welche bei Verwendung von Polypropylen im Bereich von ca. 180ºC liegen und bei Drücken von 1 bis 100 bar.

Die erfindungsgemäss hergestellten flächigen Verbundbauteile werden aufgrund ihrer Schichtanordnung auch als "Sandwich-Bauteile" bezeichnet. Solche Bauteile können als ebene oder gebogene Platten, aber auch als Bauteile mit unterschiedlichen Dicken und Verformungsgraden ausgebildet sein. Sie zeichnen sich durch eine widerstandsfähige, vergleichsweise harte und steife Aussenschicht und eine voluminösen, schall- und wärmeisolierende Innenschicht mit vergleichsweise geringer Dichte aus. Dementsprechend sind die Bauteile für eine gegebene Steifheit vergleichsweise leicht.

Das als poröser Kernlagenvorgänger vorgesehene flächige poröse Verstärkungsfaser-Thermoplastmaterial ist grundsätzlich bekannt. Gemäss einer vorteilhaften Ausführungsform wird der Kernlagenvorgänger in einem textilen Vliesverfahren bereitgestellt (Anspruch 2). Ein solches Verfahren ist beispielsweise in der WO 2006/105682 A1 beschrieben und beruht auf trockenem Vermischen von Verstärkungsfasern und Thermoplastfasern, Vernadeln des Mischvlieses und Heissverpressen desselben.

Vorteilhafterweise handelt es sich bei den Verstärkungsfasern im Kernlagenvorgänger um ungerichtete, miteinander vernadelte Fasern einer mittleren Länge (Gewichtsmittel) von 10 bis 60 mm (Anspruch 3).

Die niedrigviskose Thermoplastschicht wird vorzugsweise als dünne Folie oder auf Pulver aufgebracht (Anspruch 4). Damit wird im anschliessenden Aufheiz- und Verpressungsvorgang die erwünschte Imprägnierung der angrenzenden Decklage (A bzw. A') erreicht.

Gemäss einer Ausführungsform (Anspruch 5) erfolgt das Aufheizen und Verpressen kontinuierlich. Dabei wird die anfänglich gebildete Lagenstruktur (A-B) oder (A-B-A') kontinuierlich (in-Line) einem Laminator zugeführt. Dort wird der Thermoplast aufgeschmolzen und unter Druck die Verstärkungsfasern im Kern und in den Decklagen imprägniert.

Alternativ kann das Aufheizen und Verpressen diskontinuierlich erfolgen (Anspruch 6), indem jeweils flächige Zuschnitte nacheinander in ein Presswerkzeug gebracht und verarbeitet werden.

Je nach Anwendungsbereich kann der so hergestellte Verbund in einem zweiten Aufheiz-und Konsolidierungsschritt noch einmal über die Schmelztemperatur des Thermoplasten erwärmt werden (Anspruch 7), was zu einem Aufstellen (Loften) der Kernlage führt. Der geloftete Verbund kann dann auf eine gewünschte Wandstärke gepresst werden. Alternativ kann der zweite Aufheiz- und Konsolidierungsschritt auch dazu genutzt werden, um auf den Sandwichverbund Decklagen wie zum Beispiel Vliese, Klebefilme oder (Dekor-) Folien zu laminieren (Anspruch 8).

Grundsätzlich steht für das erfindungsgemässe Verfahren, eine ganze Reihe von erprobten Thermoplasten zur Verfügung, deren Auswahl im Bereich des Fachwissens liegt. Gemäss einer vorteilhaften Ausführungsform (Anspruch 9) ist der Thermoplast ausgewählt aus Polypropylen (PP), Polyamid (PA) und Polyethylenterephthalat (PET).

Auch für die Auswahl der Verstärkungsfasern steht eine ganze Reihe von erprobten Fasermaterialien zur Verfügung. Gemäss einer vorteilhaften Ausführungsform (Anspruch 10) sind die Verstärkungsfasern ausgewählt aus Carbonfasern, Glasfasern, Aramidfasern, Basaltfasern und temperaturstabile Synthesefasern. Der letztgenannte Begriff umfasst auch Fasern aus einem Thermoplasten mit einem oberhalb der im erfindungsgemässen Heiz- und Pressvorgang verwendeten Arbeitstemperaturen liegenden Schmelzpunkt.

Es versteht sich, dass die Auswahl der Thermoplaste wie auch der Fasermaterialien, und entsprechend auch die Kombination von Thermoplast und Fasermaterial stark durch den Anwendungsbereich des herzustellenden Bauteils geprägt sind.

Mit dem erfindungsgemässen Verfahren zur Herstellung eines flächigen Verbundbauteils lassen sich beispielsweise biegesteife Sandwichbauteile herstellen, die im wesentlichen planar sind. Gemäss einer Ausführungsform des Verfahrens (Anspruch 12), werden mittels entsprechend gebildeter Presswerkzeuge Sandwichbauteile mit lokal unterschiedlicher Dicke, d.h. 3-dimensional strukturierte flächige Verbundbauteile unterschiedlichster Art, hergestellt.

### Kurze Beschreibung der Zeichnungen

Ausführungsbeispiele der Erfindung werden nachfolgend anhand der Zeichnungen näher beschrieben, dabei zeigen:
- Fig. 1: den Lagenaufbau eines erfindungsgemäss hergestellten thermoplastisch verformbaren faserverstärkten flächigen Halbzeugs, als Schnittdarstellung;
- Fig. 2: eine Anlage zur Durchführung des erfindungsgemässen Verfahrens;
- Fig. 3: einen Abschnitt des als Sandwichverbund vorliegenden Halbzeugs;
- Fig. 4: ein flächiges Verbundbauteil, in fotografischer Darstellung; und
- Fig. 5: einen Ausschnitt des flächigen Verbundbauteils der Fig. 4, in fotografischer Darstellung.

### Wege zur Ausführung der Erfindung

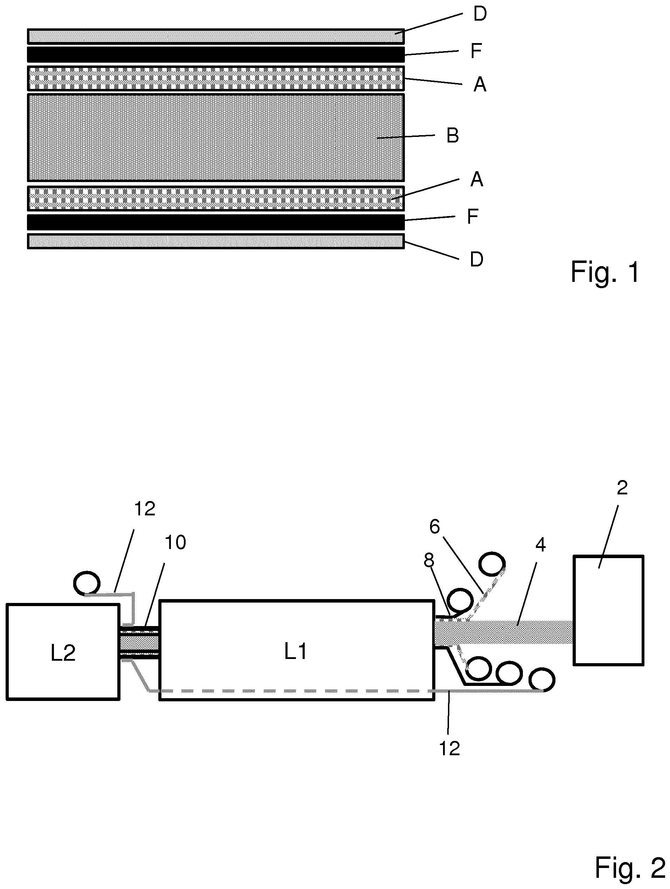

Das in der Fig. 1 dargestellte thermoplastisch verformbare faserverstärkte flächige Halbzeug weist eine symmetrische Verbundstruktur (A-B-A') auf. Diese umfasst eine Kernlage (B) aus einem porösen Verstärkungsfaser-Thermoplastmaterial sowie zwei stoffschlüssig damit verbundene Decklagen (A, A') aus einem mit Thermoplast imprägnierten Verstärkungsfaser-Gewebe. Im hier gezeigten Beispiel sind die beiden Decklagen identisch, d.h. es liegt eine symmetrische Verbundstruktur (A-B-A) vor.

Die beiden Decklagen A liegen im Halbzeug direkt auf der Kernlage auf und sind je mit einer niedrigviskosen Thermoplastschicht in Form eines Films (F) belegt. Im gezeigten Beispiel ist an der Aussenseite des Thermoplastfilms ein Dekorfilm (D) aufgebracht.

Eine Anlage zur kontinuierlichen Durchführung des Verfahrens ist in der Fig. 2 dargestellt, wobei die Verarbeitungsrichtung grundsätzlich von rechts nach links läuft. Auf einen aus einer Vernadelungsvorrichtung 2 austretenden Kernlagenvorgänger 4 wird beidseitig ein Verstärkungsfasergewebe oder -gelege 6 und ein hochviskoser Thermoplastfilm 8 aus entsprechenden Vorratsrollen abgelegt. Die so gebildete Lagenstruktur wird einem ersten Laminator L1 zugeführt und dort aufgeheizt und verpresst zu einem Verbund 10.

Im gezeigten Beispiel erfolgt noch ein weiterer Aufheiz- und Verpressungsvorgang in einem zweiten Laminator L2. Dort werden auch beidseitig je eine Decklage 12 aufgebracht.

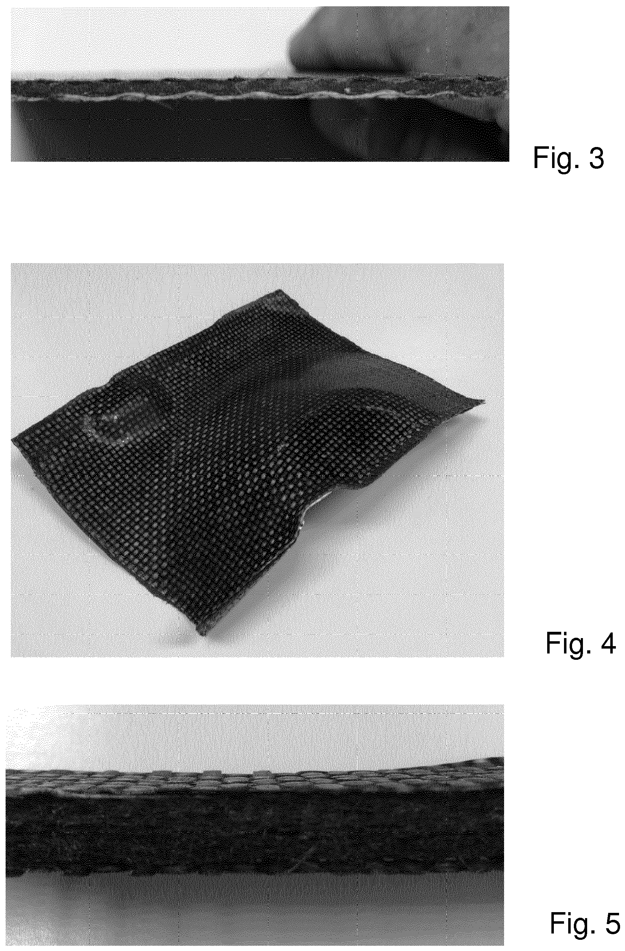

Ein erfindungsgemäss hergestelltes Verbundbauteil ist in den Fig. 3 bis 5 dargestellt.

## Patentansprüche

1. Verfahren zur Herstellung eines thermoplastisch verformbaren faserverstärkten flächigen Halbzeugs mit Verbundstruktur (A-B-A') oder (A-B), umfassend:
- eine Kernlage (B) aus einem porösen Verstärkungsfaser-Thermoplastmaterial, mit einem Flächengewicht von 300 bis 3'000 g/m², einem Faseranteil von 20 bis 60 Gew.-% und einem Gehalt an Luftporen von 5 bis 80 Vol.%, sowie
- eine oder zwei stoffschlüssig mit der Kernlage (B) verbundene Decklagen (A, A') aus einem mit Thermoplast imprägnierten Verstärkungsfaser-Gewebe oder - Gelege, wobei jede Decklage eine Dicke von 0.2 bis 2.5 mm, ein Flächengewicht von 200 bis 4'000 g/m² und einen Luftporengehalt von weniger als 3 Vol.-% aufweist,
**gekennzeichnet durch** folgende Verfahrensschritte:
- auf einen Kernlagenvorgänger in Form eines flächigen porösen Verstärkungsfaser-Thermoplastmaterials mit einem Flächengewicht von 500 bis 3'000 g/m², einem Faseranteil von 20 bis 60 Gew.-% und einem Gehalt an Luftporen von 20 bis 80 Vol.% werden ein- oder beidseitig jeweils mindestens ein Verstärkungsfaser-Gewebe bzw. -Gelege mit einem Flächengewicht von 100 bis 1'000 g/m² sowie eine niedrigviskose Thermoplastschicht mit einem Flächengewicht von 50 bis 1'000 g/m² aufgebracht,
- die derart gebildete Lagenstruktur (A-B) bzw. (A-B-A') wird aufgeheizt und verpresst derart, dass der Thermoplast aufgeschmolzen und die Verstärkungsfasern in die aufgebrachten Verstärkungsfaser-Gewebe bzw. -Gelege sowie in die Kernlage eindringen und nach Abkühlen eine stoffschlüssige Verbindung von Kernlage und Decklage bilden;
gegebenenfalls gefolgt durch einen weiteren Aufheiz- und Verpressungsvorgang.

2. Verfahren nach Anspruch 1, wobei der Kernlagenvorgänger in einem textilen Vliesverfahren bereitgestellt wird.

3. Verfahren nach Anspruch 2, dass die Verstärkungsfasern im Kernlagenvorgänger ungerichtete, miteinander vernadelte Fasern einer mittleren Länge (Gewichtsmittel) von 10 bis 60 mm sind.

4. Verfahren nach einem der Ansprüche 1 bis 3, wobei die niedrigviskoseThermoplastschicht als Folie oder Pulver aufgebracht wird.

5. Verfahren nach einem der Ansprüche 1 bis 4, wobei das Aufheizen und Verpressen kontinuierlich erfolgt.

6. Verfahren nach einem der Ansprüche 1 bis 4, wobei das Aufheizen und Verpressen diskontinuierlich erfolgt.

7. Verfahren nach einem der Ansprüche 1 bis 6, wobei in dem weiteren Aufheiz- und Verpressungsvorgang zunächst ein Aufschmelzen des Thermoplasten mit einher gehendem Expandieren der Kernlage und anschliessend ein Verpressen auf eine vordefinierte Verbunddicke erfolgt.

8. Verfahren nach einem der Ansprüche 1 bis 6, wobei in dem weiteren Aufheiz- und Verpressungsvorgang mindestens eine weitere Decklage aufgebracht wird.

9. Verfahren nach einem der Ansprüche 1 bis 8, wobei der Thermoplast ausgewählt ist aus PP, PA und PET.

10. Verfahren nach einem der Ansprüche 1 bis 9, wobei die Verstärkungsfasern ausgewählt sind aus Carbonfasern, Glasfasern, Aramidfasern, Basaltfasern und temperaturstabile Synthesefasern.

11. Verfahren zur Herstellung eines flächigen Verbundbauteils, wobei ein Zuschnitt eines nach einem der vorgenannten Ansprüche hergestellten Halbzeugs über den Schmelzpunkt des Thermoplasten erwärmt und in einem Formwerkzeug in das flächige Verbundbauteil umgeformt wird.

12. Verfahren nach Anspruch 11, wobei das flächige Verbundbauteil mit lokal unterschiedlichen Dicken gebildet wird.
